Europäisches Patentamt

European Patent Office

Office européen des brevets

(11) Publication number: **0 334 544**
**A2**

# EUROPEAN PATENT APPLICATION

(21) Application number: 89302548.6

(22) Date of filing: 15.03.89

(51) Int. Cl.⁴: **G01B 11/30 , G01N 21/88 , G06F 15/70**

(30) Priority: 19.03.88 GB 8806592

(43) Date of publication of application:
27.09.89 Bulletin 89/39

(84) Designated Contracting States:
AT BE CH DE ES FR GB GR IT LI LU NL SE

(71) Applicant: **CABOT PLASTICS LIMITED**
**Gate Street**
**Dukinfield Cheshire SK16 4RU(GB)**

(72) Inventor: **Browne, Mark Anthony**
**220 Clarenden Road**
**Manchester M16 OAQ(GB)**

(74) Representative: **Attfield, Donald James et al**
**BROOKES, MARTIN & WILSON Prudential**
**Buildings 5 St. Philip's Place**
**Birmingham B3 2AF(GB)**

(54) Method and apparatus for evaluating the surface of an object.

(57) In a method and apparatus for inspecting the surface of a flexible object such as a semiconductive tape, a laser (20) provides a beam of light that is collimated by a lens (30) and used to illuminate an horizon (24) of the object. The horizon (24) is formed by passing the object over a driven pin (36) positioned in the front focal plane (F2) of the front lens (L1) of a pair of confocal lenses (L1, L2) through which the shadow image produced by the horizon passes, the image undergoing a fourier transformation in the fourier plane (10). The image is then received on a CCD array (27) containing photosites (28). The signal received from the array (27) is processed by a microprocessor (29) and an analysis of surface defects provided either visually or by histogram.

FIG 1

## METHOD AND APPARATUS FOR EVALUATING THE SURFACE OF AN OBJECT

The present invention relates to a method and apparatus for evaluating the surface of an object.

From one aspect the invention provides a method for imaging the surface of an object wherein a collimated beam of light, white light or laser, is directed onto at least one horizon of the said object located at the front focal plane of a confocal lens pair, the resultant shadow image subjected to fourier transformation in the confocal plane of the said lens pair and projected onto a photo sensitive device and the data from the said device analysed. Optical signal processing, e.g. spatial filtering may be applied in the fourier transform plane.

The photo sensitive device is preferably a solid state detector such as a photodiode or a CCD array.

The method of the present invention may be used to infer the dimensions of an object, such as a fine fibre, in which circumstances the light is directed simultaneously on to two horizons of the object and the shadow image projected onto a CCD array, for example, the data from which is analyzed by computer to provide the relevant object dimensions, e.g the diameter of a fine fibre.

The method of the invention is particularly suitable for inspecting the surface of a flexible object such as a semi-conductive extruded tape, for surface defects. In this use a single horizon is illuminated by the beam of collimated light, the horizon being formed by passing the flexible object over a roller and the object being driven through the horizon either stepwise or continuously to produce a quasi-continuous analysis of the surface.

The light source may be a white light source or a laser providing coherent illumination, in which case the flexible horizon is preferably imaged in a stepwise process, or a pulse laser source in which case the flexible surface may be imaged continuously and viewed stroboscopically.

The preferred form of sensor is a CCD array selected to have a large aspect ratio (height to width). The illumination field is then arranged so that the defect free sample horizon image slightly obscures the sensor photosites. Vertical variation is translated into photosite height extinction thereby varying the output signal from the partially obscured photosite. In this way the surface defects are perceived as variations in the output of individual or groups of photosites. Optical scaling is then used to adjust the imaging sensitivity and range. In this use the horizon location must be carefully regulated and its movement servo-controlled. The above described method of sensing allows a very high inspection rate to be achieved, 1000 images per second may be gathered and processed.

After image formation the data from each image sensor is converted into a digital signal. Hardware data reduction is performed first and base line image variation and noise removed by a heuristic algorithm. Data is then passed for multiple peak resolution again using a heuristic algorithm. Maximum peak height, length and width are then extracted and communicated to a data evaluation computer.

For achieving a very high spatial resolution and increasing inspection rates further, the image field may be split using partially reflective elements and the reflected beams received on a plurality of CCD array sensors. Parallel image processing is then carried out by a combination of dedicated digital processors and microprocessor hardware in a parallel pipeline architecture.

The motion control and image capture (including source pulsing where necessary), are synchronous with high speed processing to ensure optimum throughput.

Embodiments of the present invention will now be described with reference to the accompanying drawings in which;

Figure 1 is a schematic representation of apparatus used to determine the dimensions of an object;

Figure 2 is a schematic representation of apparatus utilised to view the surface of a flexible object for defects using a single sensor, and

Figure 3 is a schematic representation of a further apparatus used in the determination of surface defects of a flexible object utilising three sensors.

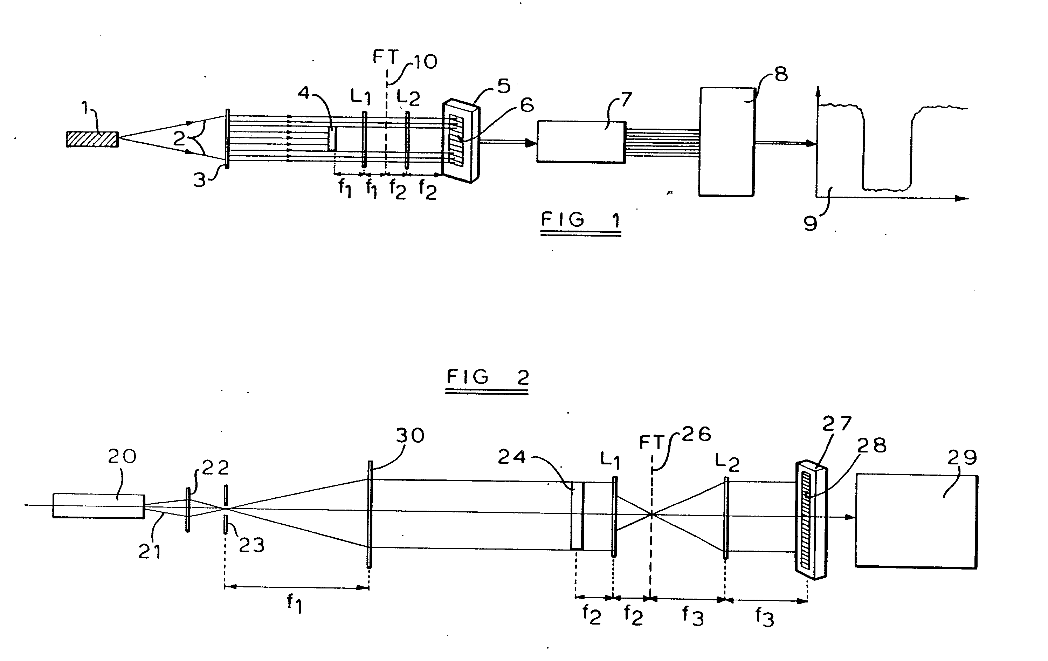

Referring to Figure 1. A laser source 1 provides a beam 2 which is passed through a collimator lens 3, a confocal lens assembly L1-L2 onto a CCD array 5 containing photosites 6, the array being positioned at the rear focal plane of lens L2. An object 4, the dimensions of which are to be determined, is positioned at the front focal plane $f_1$ of lens L1 to provide an image that undergoes a fourier transformation in fourier plane 10 and the image is received on photosites 6 of the CCD array 5. A signal, obtained as a result of partial or complete photosite extinction caused by the image falling on the array, is processed by a digital processor 7 and a microcomputer 8 to provide a display 9 from which the dimensions of the object can be calculated. Enhanced edge contrast can be obtained by the use of a spatial filter positioned in the fourier plane 10.

Theoretical considerations of the diffraction pattern lead to the evaluation of the object edge location at the 25% intensity point of the diffraction intensity distribution.

This technique provides a highly accurate method of determining, for example, diameters of fine fibres and wires.

The schematic device illustrated in Figure 2 is that used for the inspection of a surface of a semi-conducting plastic tape for defects. In the system illustrated a laser 20 provides a beam 21 that is directed through a beam expander 22 and then through a spatial filter 23 that is located at the front focal plane $f_1$ of a collimator lens 30. The collimated laser beam is passed over a horizon 24 of the sheet of tape, the horizon being formed by the tape being wrapped over a roller located transversely of the beam (not shown). The horizon 24 is arranged to be positioned at the front focal plane $f_2$ of the front lens L1 of a pair of confocal lens L1, L2 that provide a fourier plane 26. A spatial filter (not shown) may be positioned in the fourier plane 26 to enhance the image edges. After passing through lens L2 the image is received on a CCD array sensor 27 containing photosites 28. The signal received from the array is then processed by a combination of dedicated digital processors and a micro- processor 29. In a typical example of this system the laser was .5mWHeNe laser(632.8nm) with a beam diameter of 0.6mm and a beam divergence of 1.3mrad. The beam expander 22 provided a 40 times magnification. In order to generate a clean, noise free collimated laser beam the spatial filter contained a 10 $\mu$ pin hole and the beam was directed onto 20cm collimating lens. The confocal lens system L1,L2 allowed the direct shadow, or edge enhanced image, without substantial diffraction effects, to be projected onto the CCD array 27. The CCD array 27 is a 1024 array by RETICON which is designed for applications that require high sensitivity and wide dynamic range. The pixel geometry (250 x 15 $\mu$, 25 $\mu$ centre to centre) of the array permits the use of the vertical plane of the photosite to detect the shadow image profile and to perform a transformation from 2-D to a 1-D signal.

The imaging lens (L1) performs a fourier transform and brings the far field diffraction pattern of the total horizon to its focal plane and the reconstruction lens (L2), that performs as inverse for the transform, projects the diffraction free shadow image onto the sensor 27. As noted above the use of a spatial filter positioned in the fourier plane 26 produces enhanced edge contrast, which is especially noticeable when defects are observed in the tape surface. In order to ensure that a diffraction free shadow image is obtained a close control of the optical arrangement is required, in particular the positioning of the horizon 24 at the front focal plane of the imaging lens L1.

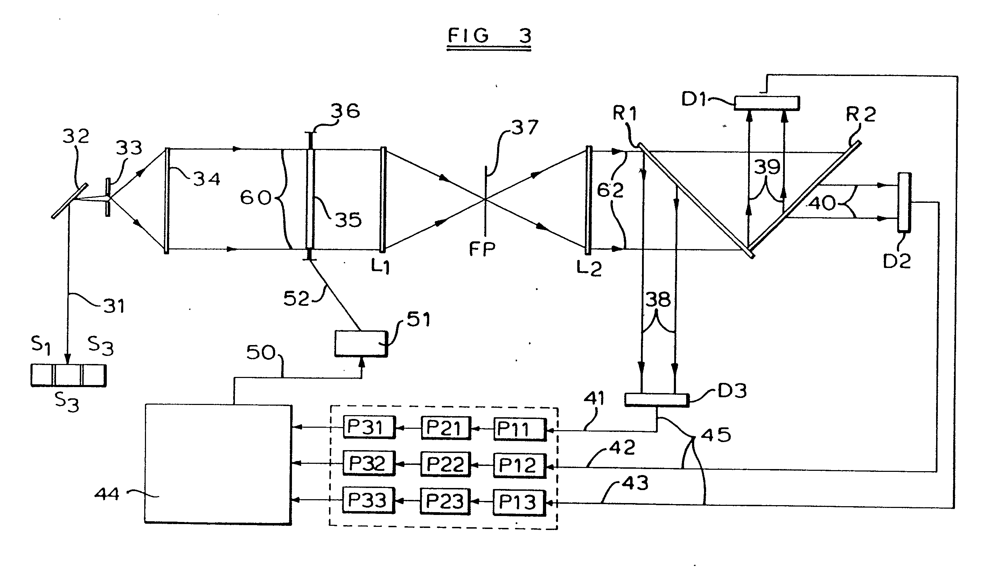

A preferred form of apparatus is schematically illustrated in Figure 3. In this example provision is made for white light, laser and pulse laser sources (S1, S2 and S3) to be used.

A beam of light 31 from laser S2 is reflected from mirror 32 through a spatial filter 33 onto a collimator lens 34. The collimated beam 60 is passed over horizon 35 of a sheet of tape which is wrapped over pin 36 and driven continuously via line 52 from the servo-controller 51. The horizon 35 is placed accurately at the front focal plane of lens L1 of confocal lens pair L1, L2. The shadow image produced by the horizon 35 then passes through lens L1, fourier plane 37 through lens L2 to provide a diffraction free image beam 62. The image is received on partially reflective elements R1, R2 to provide a split into three beams, 38, 39 and 40 that are received by one dimensional image sensors, D1, D2 and D3. The data from image sensors, D1, D2 and D3 is processed in a parallel pipeline architecture 45 in the form of a digital signal 41, 42 and 43 respectively. Hardware data reduction is performed first in a parallel pipeline and base-line variation and noise is removed by a heuristic algorithm at P11, P12 and P13. Significant data is then passed in real time to the next stage of the parallel pipeline P21, P22, and P23 for multiple peak resolution and a heuristic algorithm is used to overcome confusion caused by the production of peaks at the same location in multiple image lines. Maximum peak height, length and width are extracted in the final stage of the pipeline, P31, P32 and P33 and communicated to the data evaluation computer 44.

In this system motion control and image capture are synchronous with high speed processing to ensure optimum throughput. As previously noted the tape surface providing the horizon 35 is driven by a servo-control 51 and a mechanical device 52 which is controlled by computer 44 via line 50. A second servo-control (not shown) controls the height of the tape within the collimated beam to ensure that the image sensors output maintains a constant mean value.

The data evaluation computer, 44, provides information regarding surface defects statistics such as size distribution - width correlation and defect length. It also can be used with a pipeline 45 to gather image data and provide graphical isometric presentations of the surface for operator evaluation.

The system is capable of identifying defects from 2 $\mu$ upwards.

Claims

1. A method for imaging the surface of an object characterised in that a collimated beam of light, white light or laser is directed onto at least one horizon of the said object located at the front focal plane of a confocal lens pair, the resultant shadow image subjected to fourier transformation in the confocal plane of the said lens pair and projected onto a photosensitive device and the data from the said device analysed.

2. A method according to claim 1 characterised in that optical signal processing is applied to the shadow image in the fourier transformation plane.

3. A method according to claim 2 characterised in that the optical signal processing is spatial filtering.

4. A method according to claims 1, 2 or 3 characterised in that the photosensitive device is a photodiode or a CCD array.

5. The method of any one of the preceeding claims when applied to infer the dimensions of an object characterised in that the collimated beam of light is directed simultaneously onto two horizons of the object and the shadow image projected onto a photosensitive device and the data analysed to provide the object dimensions.

6. The method of any one of claims 1 - 4 when used for inspecting the surface of a flexible object for surface defects, characterised in that a single horizon of the flexible object is formed by passing the said object over a fixed guide means, the horizon illuminated by a beam of collimated light and the object driven through the horizon either stepwise or continuously to form a shadow image on the photosensitive device and the data therefrom processed to produce an analysis of surface defects.

7. A method according to claim 6 characterised in that the light source is white light or a laser providing coherent illumination and the horizon is imaged in a stepwise process.

8. A method according to claim 6 characterised in that the light source is a pulse laser source and the horizon is imaged continuously and viewed stroboscopically.

9. A method according to any one of claims 6 - 8 characterised in that the shadow image produced by the horizon is split by passage through an angled pair of partially reflective elements and the reflected beams received on a plurality of photosensitive devices, and data from the photosensitive devices processed in parallel to provide an analysis of surface defects.

10. Apparatus for imaging the surface of an object comprising a light source (1,20,52); a collimator lens (3,30,34) to produce a beam of light, directed from the said source; a confocal lens pair, (L1, L2) to receive the collimated beam of light; means for supporting an object (36), the surface of which is to be imaged, positioned at the front focal plane of the first said confocal lens (L1); a photosensitive device (5, 27, D1, D2, D3) to receive light passing through the confocal lens pair, (L1, L2) and means (8, 29, 44) for analysing the data provided by the photosensitive device.

11. An apparatus according to claim 10 including a beam expander (22, 33) and a spatial filter (23) positioned between the light source and the collimator lens.

12. An apparatus according to claim 10 or 11 when used for imaging the surface of a flexible object characterised in that the means for supporting the object is a driven roller (36), and further comprising an angled pair of partially reflective elements (R1, R2) positioned to receive the light beam from the confocal lens pair (L1,L2), photosensitive devices (D1, D2, D3) positioned to receive reflected and transmitted beams from the partially reflective elements (R1, R2), and means (P11, P12, P13; P21, P22, P23; P31, P32, P33) to process the data from the photosensitive devices in parallel to provide an analysis (44) of the surface of the flexible material.

FIG 1

FIG 2

FIG 3

EP 0 334 544 A2